# EUROPEAN PATENT APPLICATION

(11) **EP 4 491 583 A1**
(43) Date of publication of application: **15.01.2025**
(21) Application number: 24187351.2
(22) Date of filing: 09.07.2024
(51) Int. Cl.: C02F 1/00, B01D 24/10, B01D 24/16, B01D 24/40, B01D 35/12, C02F 1/28, C02F 1/42

(54) **WATER FILTER AND METHOD FOR OPERATING A WATER FILTER**

(30) Priority: 10.07.2023 DE 102023118228
(71) Applicant: Aquis Systems AG, 9445 Rebstein (CH)
(72) Inventor: Huck, Kai, 9428 Walzenhausen (CH); Gröning, Ingolf, 97980 Bad Mergentheim (DE)
(74) Representative: Zimmermann & Partner Patentanwälte mbB

(57) **Abstract**

The invention relates to a water filter (100) for filtering water, in particular for filtering water in a household and/or in particular for filtering water at a maximum flow rate of 20 1/min, having a container (10) for receiving filter elements; an infeed (21) for feeding water to a passage element (22); wherein a passage opening (23) is provided in the passage element (22), and a container opening (25) is provided in the container (10), and having an adjustment device (12) for positioning the passage element (22) having the passage opening (23) so as to be adjustable relative to the container (10) having the container opening (25).

## Description

### Technical field

The invention relates to a water filter and to a method for operating a water filter.

### Prior art

Water filters which filter tap water by means of passing the latter through various substances, or remove calcium from the water by chemical reactions, for example, are known from the prior art. Typical water filters have a housing of plastics material, which is not easy to open and makes it possible for the substances within the housing to be reliably enclosed and protected in relation to access or in relation to being released into the environment in an uncontrolled manner.

It is known that water when flowing through plastics materials is capable of releasing and entraining finest particles of the plastic material, so-called microplastics. This can result in the water being undesirably contaminated with microplastics. Furthermore, products which have a materially integral connection are not suitable, or suitable only to a limited extent, for recycling processes, so that said products typically have to be disposed of together with the general waste by the customers. This may withhold a multiplicity of recyclable raw materials.

### Disclosure of the invention

It is an object of the invention to at least partially solve the issues arising from the prior art. It is in particular an object of the invention to specify a water filter and a method for operating a water filter which reduce the introduction of plastics material into water to be filtered in comparison to known water filters and methods, or which improve the potential for recycling.

This object is achieved by a water filter according to Claim 1, and by a filter system and by a method for operating a water filter according to the coordinate claims. Advantageous refinements and embodiments are derived from the dependent claims and from the present description.

A first aspect of the invention relates to a water filter for filtering water, in particular for filtering water in a household and/or in particular for filtering water at a maximum flow rate of 20 l/min, having a container for receiving filter elements, an infeed for feeding water to a passage element, wherein a passage opening is in the passage element, and a container opening is provided in the container, and having an adjustment installation for positioning the passage element having the passage opening so as to be adjustable relative to the container having the container opening.

A further aspect of the invention relates to a filter system having a water filter in one of the typical embodiments described herein, and a filter head to which the water filter is able to be releasably fastened.

A further aspect of the invention relates to a method for operating a water filter in one of the typical embodiments described herein, comprising the step: adjusting the position of the infeed having the outlet openings relative to the inlet opening in order to adapt the water filter to water to be anticipated at the installation site.

Typical embodiments can have various or a plurality of advantages in comparison to the prior art. Owing to recyclable materials being utilized, in particular owing to the partial or complete elimination of plastics material, resources are preserved and the risk of microplastics being formed is avoided. By virtue of the simple adjustment of the filter cartridge to the water hardness level, especially with a blending device integrated within the filter, it is possible for the filter to be utilized worldwide and to be adapted to for example integrated domestic softening plants, without the pH value of the water being excessively altered. The blending device can be adjusted by a user in an installed or uninstalled condition of the blending device. Thereby, it is possible react on or to adapt for, e.g. a changing calcium content of the water streaming to the inlet. By utilizing two outlets, prepared water, in particular cold water, for example drinking water, with a high calcium content, or a calcium content comparable to that of the inlet, for example in order to achieve a high degree of carbonation, can be provided from one of the outlets. Furthermore, the build-up of limescale by hot water can be reliably prevented in that water that has been partially softened is provided at the other outlet.

In typical embodiments, the passage element is adjustable from the outside of the container. Typically, the passage element is arranged within the container. Thereby, a blending device is provided within the container, and the blending device can be adjusted from the outside of the container.

### Brief description of the drawings

The present invention will be explained in more detail hereunder by means of the appended drawings in which:
- Fig. 1: shows a schematic view of a water filter according to a typical embodiment; and
- Fig. 2: shows a schematic view of a filter head according to one embodiment.

### Description of exemplary embodiments

Typical embodiments of the invention will be described hereunder by means of the figures, wherein the invention is not limited to the exemplary embodiments, the scope of the invention rather being determined by the claims. In the description of the embodiment, the same reference signs are potentially used for identical or similar parts in different figures and for different embodiments for the sake of increasing the clarity of the description. However, this does not mean that corresponding parts of the invention are limited to the variants illustrated in the embodiments. To the extent that the term "or" is used herein without further details, this term is understood to mean and/or, unless precluded by the context.

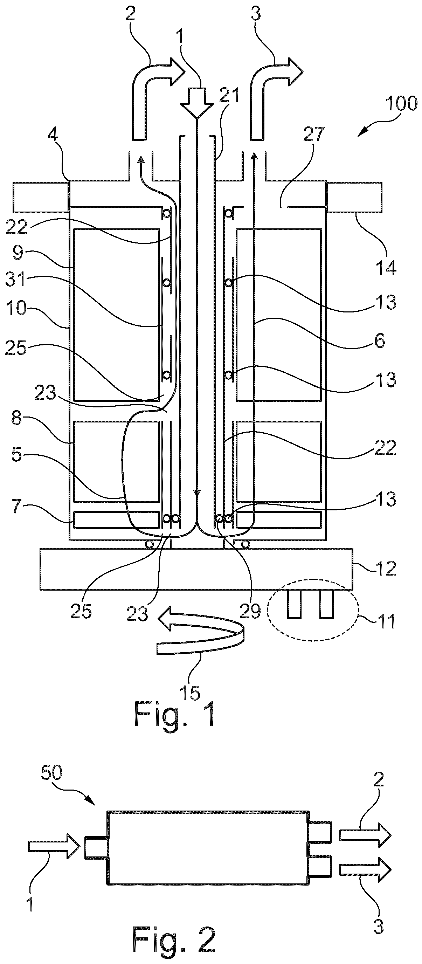

Fig. 1 shows an exemplary embodiment of a water filter 100 in a schematic view. The water filter comprises an inlet 1 for unfiltered water which makes its way from the inlet into an infeed 21. The infeed is cylindrical and extends centrically along an opening in a container 10 in which different filter elements, more specifically a particle filter 7, a carbon block 8 and an exchanger resin 9, are disposed.

Furthermore, a passage element 22 having passage openings 23 extends coaxially about the infeed 21. The container 10 has an opening which is centric along a central axis and is delimited by an internal wall 31. The container openings 25 are provided in the internal wall 31.

Typical water filters comprise a container having a continuous opening which is formed by an internal wall of the container, wherein the container openings are provided in the internal wall. Typical internal walls are cylindrical. Typical covers of embodiments have a centric opening. Typical containers of embodiments are cylindrical or pot-shaped.

Typical infeeds have a feed pipe which is disposed so as to be coaxial with the container or with the passage element. Typical passage elements are cylindrical, wherein the passage openings are provided in the shell face.

Typical water filters are particularly suitable for filtering water in a household, or in particular for filtering water at a maximum flow rate of 50 l/min, or at most 20 l/min. Typically provided is a container for receiving filter elements, and an infeed for feeding water to a passage element. The passage element typically has a plurality of passage openings, wherein a plurality of container openings are provided in the container. By suitably positioning the passage openings relative to the container openings it is possible to adjust different paths for the water running through the filter, or to adjust relative flow capacities through different filter elements. Paths by way of which the water flowing through the filter does not pass through all of the filter elements, or in some embodiments even any filter elements, can also be adjustable. In order for the passage element to be adjusted, typical embodiments have an adjustment device for positioning the passage element so as to be adjustable relative to the container. Optionally, this adjustment can also be achieved by a displaceable perforated plate between the different filter elements, which is twisted or displaced in relation to a stationary perforated plate.

In the embodiment of Fig. 1, an adjustment wheel 12 by way of which the angular position of the cylindrical passage element 22 can be adjusted relative to the container 10 is provided at a lower end of the passage element 22. As a result, the position of passage openings 23 of the passage element 22 is adjusted relative to container openings 25 of the container. The cross section for the water passing through can be adjusted by way of a partial overlap of the openings.

In typical embodiments, the adjustment wheel, or more generally, the adjustment device, is arranged outside of the container, especially below the container. In typical embodiments, the adjustment wheel, or more generally the adjustment device, is accessible and adjustable outside of the container. Typically, the passage element inside of the container is adjustable from the outside of the container. In this context, "top" and "bottom" are to be understood purely as indications in order to differentiate the position on the water filter; the water filter can also be used in a lying or upside-down position. An adjustment device or an adjustment wheel which is situated below the container in a built-in or installed condition of the container, allows for an adjustment of the passage element or of the blending device even without a dismounting of the water filter. Thereby, a user may react on changing water conditions without having to mandatory dismount the water filter.

The water filter 100 of Fig. 1, like typical embodiments, has a cover 4 which closes the container 100 in particular at an upper end, thus opposite the adjustment wheel 12.

In typical embodiments as shown in Fig. 1, the passage element or the container is produced at least substantially from an inorganic material or from a plastics-free material. Examples of inorganic material or plastics-free material may include stainless steel, more generally metal alloys, glass or ceramic. In this context, "at least substantially" can mean, for example, at least 80% in weight. In embodiments, at least one part or both parts can be produced completely from an inorganic material or from a plastics-free material. In typical embodiments, at least those parts of the passage element or of the container that are in contact with the water passing through are produced from an inorganic material or from a plastics-free material.

As in the embodiment of Fig. 1, the cover 4 in typical embodiments is connected to the container 10 in such a manner that releasing the cover 4 from the container 10 in a non-destructive manner is possible only when using a tool. The tool is typically a special tool. Special tools are distinguished, for example, in that they can be used for releasing latching cams, or more generally fastening means, that cannot easily be released, or cannot be released according to the intended use, with typical standardized tools. Typical connections can be, as in Fig. 1, for example a connecting periphery 14 of the container 10, which is only highly schematically illustrated and has a bayonet closure with a latching cam.

In variants of embodiment, a securing element which breaks when the connection between the cover and the container is opened is also present between the cover of the filter and the container, so that the element provides a secured form-fitting connection which, once opened, for example by an unauthorized person, can ensure that no new form-fitting connection can be re-established. In typical embodiments, a form-fitting connection can then only be re-established by way of replacement.

A first outlet and a second outlet are typically provided in the cover.

The cover 4 of the embodiment of Fig. 1 has a first outlet 2 and a second outlet 3. The outlets 2 and 3 serve to discharge water from respective spaces situated upstream of the outlets 2 and 3.

Two paths for the water to be filtered run through the water filter 100 of Fig. 1 in the shown adjustment of the adjustment wheel 12, which is adjustable as shown by the arrow 15, said adjustment being shown in the display 11 of the filtration quality: a first path 5 and a second path 6. Both paths 5 and 6 start at the inlet 1, run through the infeed 21 and onward through passage openings 23 of the passage element 22, through container openings 25 and the container 10. The first path 5 ends at the first outlet 2, wherein the second path 6 ends at the second outlet 3. The respective proportions of water flowing through specific ones of the filter elements can be adjusted depending on the adjustment of the adjustment wheel 12.

In typical embodiments, the first outlet and the second outlet are in each case able to be assigned at least partially different paths for water running through the container and filter elements disposed in the latter. The paths are in particular adjustable by positioning the passage element, in particular by means of the adjustment element or adjustment wheel.

In variants of embodiments, two outlets are present at one inlet, wherein the water filter is specified in such a manner that water is always available at a first outlet, said water only being filtered by part of the filter elements or only by specific, but not all, types of the filter elements, for example only the particle filter and the carbon block. In typical embodiments of water filters, water which is at least partially routed through at least one further filter element, or through all types of filter elements, for example additionally through the exchanger resin, is available at a second outlet. The proportion of water that is routed through the further filter element, or through all types of the filter elements, to the second outlet in the process can be adjustable. This proportion is typically mixed with the other water again in front of the second outlet. The water filter is typically specified in such a way that the latter can provide water for carbonation plants as well as water for heating plants. The water hardness of the water for heating plants is typically reduced by the filter, at least to the extent necessary.

In variants of embodiment, the inlet and the outlets are sealed in the shipping state, so that hygiene standards are maintained even during comparatively long storage. The seal by which the inlet and the outlets are sealed is typically specified in such a way that said seal is automatically perforated when the water filter is inserted into a filter head.

In typical water filters, as shown in Fig. 1, the infeed, the cover and the container are disposed so as to be concentric with a centric axis. This enables a compact construction.

The container typically comprises a container outlet which is connected to at least the first outlet or the second outlet, irrespective of a position of the passage element.

The container 10 in Fig. 1 has a container outlet 27 which is disposed on an upper side of the container. The container outlet 27 is provided in such a manner that water from the container to direct into the space upstream of the outlet 3, irrespective of the position of the passage element 22. This is part of the second path 6. In this way, all filter elements, or all types of filter elements, are passed through on the second path 6.

In typical water filters, an intermediate space is provided between the passage element and the infeed, wherein a plurality of seals are provided between the passage element and the container. In particular in embodiments, the seals are disposed in such a manner that a discharge of water from a container opening and through a passage opening into the intermediate space is possible depending on the adjustment of the passage element.

In typical embodiments as in Fig. 1, the intermediate space between the passage element 22 and the infeed 21 is sealed in relation to the infeed 21 by an infeed seal 29. A direct transfer of water from the infeed 21 into the intermediate space is prevented as a result.

Furthermore, seals 13 are provided between the passage element 22 of Fig. 1 and the container 10, which seals 13 are disposed in such a manner that a discharge of water from a container opening 25 and through a passage opening 23 into the intermediate space is possible depending on the adjustment of the passage element 22.

In typical embodiments, the passage openings, the container openings and the seals are disposed in such a manner that water from the container, after passing through, for example, only one filter element, or not all filter elements, is directed out of the container again and into a region of the intermediate space which is delimited by seals. At least one of these regions can be connected to at least one of the outlets in such a way that a bypass which circumvents at least one of the filter elements of the water filter is able to be established in this way. By adjusting the passage element relative to the container by means of the adjustment device or the adjustment wheel, at least a proportion of the water can be directed by way of this bypass.

Typical water filters comprise a connecting periphery which is disposed on the container, in particular on an upper periphery of the container. The connecting periphery can have clearances or protrusions for fastening the container to a filter head. The forces of weight and at least part of the reaction forces of the water pressure are directed directly into the filter head in these ways. The form-fitting connection between the cover and the container is not stressed by the force of weight.

Embodiments of the invention also comprise filter systems having a water filter in one of the embodiments described herein, and a filter head to which the water filter is able to be releasably fastened. The releasable fastening can be specified in such a manner, for example, that it is releasable by a rotating movement or by a tilting movement, in particular without a tool. As a result, the water filter can easily be replaced.

A typical example of a filter head 50, which is suitable for the water filter 100 of Fig. 1, is shown in Fig. 2. The filter head extends the length of the inlet 1 and of the outlets 2 and 3 of the water filter through the housing of said filter head. The filter head 50 in Fig. 1 is thus placed onto and fastened to the top of the water filter. In the process, end pieces of pipes, for example of the cover 4, engage in a manner known per se with corresponding receptacles (not shown) of the filter head 50 when the water filter 100 is inserted into the filter head.

The filter head 50 is fastened to the connecting periphery 14 of the water filter 100, and in this way directly absorbs the force of weight and in part reaction forces due to the water pressure. The fastening takes place by means of the connecting periphery 14 using a type of bayonet connection which can also be released by a user.

The releasable connection offers the advantage that a user can release the water filter, hand the latter over to a service center, where the cover is removed and the filter elements can be replaced. This guarantees reliable maintenance of the water filter.

Typical methods for operating the typical water filter 100 comprises adjusting a position of the passage element 22 having the passage openings 23 relative to the container 10 having the container openings 25 in order to adapt the water filter to water to be anticipated at the installation site. The passage cross sections of the combined openings of passage openings and container openings are adjusted by the adjustment in such a way that a sufficient proportion of the water is directed through the exchanger resin, for example.

The invention is not limited to embodiments described above, the scope of the invention rather being determined by the appended claims.

### List of reference signs

- 1: Inlet for unfiltered water
- 2: First outlet
- 3: Second outlet
- 4: Cover
- 5: First path
- 6: Second path
- 7: Particle filter
- 8: Carbon block
- 9: Exchanger resin
- 10: Container
- 11: Display of filtration quality
- 12: Adjustment wheel
- 13: Seal
- 14: Connecting periphery
- 15: Arrow
- 21: Infeed
- 22: Passage element
- 23: Passage openings
- 25: Container openings
- 27: Container outlet
- 29: Infeed seal
- 31: Internal wall
- 50: Filter head
- 100: Water filter

## Claims

1. Water filter (100) for filtering water, in particular for filtering water in a household and/or in particular for filtering water at a maximum flow rate of 20 l/min, having
a container (10) for receiving filter elements;
an infeed (21) for feeding water to a passage element (22), wherein the passage element (22) is arranged within the container (10);
wherein a passage opening (23) is provided in the passage element (22), and a container opening (25) is provided in the container (10), and having
an adjustment device (12) for positioning the passage element (22) having the passage opening (23) so as to be adjustable relative to the container (10) having the container opening (25).

2. Water filter (100) according to Claim 1, having a cover (4) which closes the container (10).

3. Water filter (100) according to one of the preceding claims, wherein the passage element (22) and/or the container (10) are/is produced at least substantially from an inorganic material or from a plastics-free material.

4. Water filter (100) according to Claim 2 or 3, wherein the cover (4) is connected to the container (10) in such a manner that releasing the cover (4) from the container (10) in a non-destructive manner is possible only when using a tool.

5. Water filter (100) according to one of the preceding claims, wherein a first outlet (2) and a second outlet (3) are provided in the cover (4).

6. Water filter (100) according to Claim 5, wherein the first outlet (2) and the second outlet (3) are in each case able to be assigned at least partially different paths (5, 6) for water running through the container (10) and filter elements disposed in the latter.

7. Water filter (100) according to one of the preceding claims, wherein the container (10) has a continuous opening which is formed by an internal wall of the container (10), wherein the container opening (25) is provided in the internal wall.

8. Water filter (100) according to one of the preceding claims,
- wherein the adjustment device (12) is arranged outside of the container (10) and/or wherein the adjustment device (12) is accessible and adjustable outside of the container (10); and/or
- wherein the infeed (21) has a feed pipe which is disposed so as to be coaxial with the container (10) and/or with the passage element.

9. Water filter (100) according to one of the preceding claims, wherein the adjustment device (12) is specified to position the passage element (22) so as to be adjustable relative to the container opening (25) by rotation about an axis.

10. Water filter (100) according to one of the preceding claims, wherein the infeed (21), the cover (4) and/or the container (10) are disposed so as to be concentric with the axis.

11. Water filter (100) according to one of the preceding claims, wherein the container (10) comprises a container outlet (27) which is connected to at least the first outlet (2) and/or the second outlet (3), irrespective of a position of the passage element (22).

12. Water filter (100) according to one of the preceding claims, wherein an intermediate space is provided between the passage element (22) and the infeed or the feed pipe of the infeed (21), and wherein a plurality of seals (13) are provided between the passage element (22) and the container (10).

13. Water filter (100) according to one of the preceding claims, wherein the container (10), a connecting periphery (14), has clearances and/or protrusions for fastening the container to a filter head (50).

14. Filter system having a water filter (100) according to one of the preceding claims, and a filter head (50) to which the water filter (100) is able to be releasably fastened.

15. Method for operating a water filter (100) according to one of Claims 1 to 13, comprising the step:
- adjusting a position of the passage element (22) having the passage openings (23) relative to the container (10) having the container openings (25) in order to adapt the water filter (100) to water to be anticipated at the installation site.
